Europäisches Patentamt

European Patent Office

Office européen des brevets

(11) Veröffentlichungsnummer: **0 276 395 B1**

# EUROPÄISCHE PATENTSCHRIFT

(45) Veröffentlichungstag der Patentschrift: **11.09.91**

(51) Int. Cl.⁵: **G01D 5/38**

(21) Anmeldenummer: **87116935.5**

(22) Anmeldetag: **17.11.87**

(54) **Lichtelektrische Messeinrichtung.**

(30) Priorität: **27.01.87 DE 3702314**

(43) Veröffentlichungstag der Anmeldung:
**03.08.88 Patentblatt 88/31**

(45) Bekanntmachung des Hinweises auf die
Patenterteilung:
**11.09.91 Patentblatt 91/37**

(84) Benannte Vertragsstaaten:
**AT CH DE ES FR GB IT LI NL SE**

(56) Entgegenhaltungen:
**EP-A- 0 006 482**
**GB-A- 2 146 765**
**US-A- 4 629 886**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Michel, Dieter, Dipl.-Ing. (FH)**
**Langauenstrasse 12**
**W-8220 Traunstein(DE)**

**Beschreibung**

Die Erfindung bezieht sich auf eine lichtelektrische Meßeinrichtung zur Messung der Position eines Beugungsgitters relativ zu einem Substrat.

In den letzten Jahren hat auf dem Gebiet der Geschwindigkeits- und Positionsmessung die Weiterentwicklung von Meßinstrumenten erhebliche Fortschritte gemacht, und es wurden für Verfahrensabläufe und Prüfzwecke Meßgeräte entwickelt, die unter Verwendung elektronischer Schaltungen auf dem Einsatz von Licht, Magnetismus und dergleichen beruhen. Geräte, bei denen zum Messen Licht eingesetzt wird, sind als Lichtwellen-Interferenzmeßgeräte bekannt, bei denen die Wellenlänge von Laserlicht als Bezugsgröße herangezogen wird. Die Genauigkeit dieser Meßgeräte erfüllt in ausreichendem Maße die Erfordernisse der heutigen industriellen Technik, jedoch läßt sich in vielen Fällen sagen, daß die erzielbare hohe Genauigkeit einen großen wirtschaftlichen Aufwand erfordern würde.

Als Beispiel für ein Meßgerät, bei dem eine Beleuchtungseinrichtung und ein Empfänger auf einer gemeinsamen Leiterplatte angeordnet sind, sei die DE-OS 34 27 947 genannt.

Bei einer Werkzeugmaschine beispielsweise ist ein Meßgerät erforderlich, dessen mittlere Genauigkeit zwischen der Genauigkeit von Lichtwellen-Interferenzmeßgeräten und der Genauigkeit von magnetischen Meßsystemen liegt, so daß ein optisches Beugungsgitter eingesetzt werden kann, dessen Gitterkonstante in der Größenordnung von einigen Mikrometern liegt. Ein solches Meßgerät stellt einen Kompromiß zwischen erforderlicher Genauigkeit und vertretbaren Kosten dar. In der DE-OS 33 16 144 und der JP-OS 59-164 914 werden derartige Geräte beschrieben.

Bei derartigen Geräten stellt das Beugungsgitter das Bezugsmaß dar. Ein Beugungsgitter besteht aus sehr dünnen Gitterlinien, die dicht nebeneinander liegend auf einer Glas- oder Metallplatte durch mechanische Bearbeitung, ein optisches Lithographieverfahren, Elektronenstrahllithographie oder dergleichen ausgebildet sind. Ferner sind vorgesehen: eine Lichtquelle, die monochromatisches Licht aussendet, beispielsweise Laserlicht, zwei Reflektrospiegel und der auf der der Lichtquelle gegenüberliegenden Seite der Lichtquelle befindliche Detektor, der Interferenzlicht empfängt. Der von der Lichtquelle ausgesendete Lichtstrahl wird von dem Beugungsgitter gebeugt und hindurchgelassen. Ein von dem Beugungsgitter gebeugter Lichtstrahl stellt Beugungslicht (ein Beugungslichtbündel) der N-ten Ordnung dar, und unter dem Einfluß des Beugungsgitters erhält man in der Wellenfront des Lichts einen Wert N $\zeta$, bei dem es sich um das Produkt der Ordnungszahl und der Phase handelt.

Der Lichtstrahl hingegen, der geradlinig durch das Beugungsgitter läuft, enthält keine Phaseninformation. Die beiden Lichtstrahlen werden von den Reflektorspiegeln reflektiert und laufen entlang des Hinwegs zurück, um erneut in das Beugungsgitter einzutreten und von diesem gebeugt und hindurchgelassen zu werden. Das hindurchgelassene Licht des einen Lichtstrahls und das gebeugte Licht N-ter Ordnung des anderen Lichtstrahls werden räumlich selektiert, interferieren miteinander und treten in einen Detektor ein. Nun wird in dem gebeugten Licht N-ter Ordnung des zweiten Lichtstrahls der Wert -N $\zeta$ des entgegengesetzten Vorzeichens durch die Phase des Beugungsgitters erhalten, während in dem durchgelassenen Licht des ersten Lichtstrahls nur die zuvor entstandene Phase N$\zeta$ vorhanden ist, so daß das Interferenzlicht 2N$\zeta$ entspricht, was dem doppelten Betrag der Phase des Beugungsgitters entspricht. Wenn man nun also annimmt, daß das Beugungsgitter bezüglich einem anderen Teil des optischen Systems, beispielsweise bezüglich der Lichtquelle und den Reflektorspiegeln relativ bewegt wird, so bewegt sich das Interferenzlicht über 2N Perioden, wenn sich das Beugungsgitter über eine Periode bewegt.

Bei einer weiteren bekannten Anordnung wird der von der Lichtquelle ausgesendete Lichtstrahl von dem Beugungsgitter gebeugt, und Lichtbündel derselben Ordnung mit unterschiedlichen Vorzeichen überlappen sich und interferieren miteinander, indem ein halbdurchlässiger Spiegel oder dergleichen vorgesehen wird, bevor das Licht in den Detektor eintritt. In diesem Fall erhält man aufgrund der Phase des Beugungsgitters in den gebeugten Lichtstrahlen die Größen N$\zeta$ und -N$\zeta$, wobei N die Beugungs-Ordnungszahl ist, so daß man das Interferenzlicht 2N$\zeta$ erhält, also einen Betrag, der doppelt so groß ist wie die Phase des Beugungsgitters. Nimmt man also wieder an, daß das Beugungsgitter und ein anderer Teil des optischen Systems relativ zueinander bewegt werden, wie es bereits oben erläutert wurde, so bewegt sich das Interferenzlicht über 2N Perioden, während sich das Beugungsgitter über eine Periode bewegt.

Um die beschriebene optische Anordnung auf kleinem Raum unterbringen zu können, ist es notwendig, die Winkel der Lichtstrahlen bezüglich des Beugungsgitters auszugleichen. Wenn in diesem Fall jedoch die relative Lage des optischen Systems bezüglich des Beugungsgitters in Richtung der Gitterlinien des Beugungsgitters verschoben wird, erfolgt eine Phasenänderung, die derjenigen Phasenänderung ähnlich ist, die auftritt, wenn die Relativbewegung senkrecht zur Ebene des Beugungsgitters erfolgt, so daß die Meßgenauigkeit klein ist. Tritt der Lichtstrahl senkrecht ein, so wird der oben erläuterte Nachteil vermieden, jedoch wird das optische System sehr umfangreich, so daß relativ viel Platz zur Verfügung stehen muß.

Aus der nicht vorveröffentlichten Patentanmeldung EP-A-254823 ist eine Positionsmeßrichtung bekannt, die einfach im Aufbau ist und bei der Störungen durch Umgebungseinflüsse weitgehend ausgeschaltet sind, so daß sich eine zuverlässige Arbeitsweise ergibt.

Die Vorteile des Gegenstandes der vorgenannten Patentanmeldung sind die kompakte Bauweise, die Integrationsfähigkeit und die Störsicherheit gegenüber Umgebungseinflüssen.

Der Erfindung liegt die Aufgabe zugrunde, bei einer Meßeinrichtung der genannten Gattung die Bausteine so auszugestalten, daß sich ein höherer Integrationsgrad ergibt.

Diese Aufgabe wird durch eine Meßeinrichtung mit den Merkmalen des Anspruchs 1 gelöst. Die in den Unteransprüchen angegebenen Merkmale gestalten in ganz besonders vorteilhafter Weise die Meßeinrichtungen gemäß Anspruch 1 aus.

Die Erfindung soll nachstehend mit Hilfe von Ausführungsbeispielen anhand der Zeichnungen noch näher erläutert werden. An dieser Stelle muß ausdrücklich darauf hingewiesen werden, daß bei den Darstellungen die geometrischen Zuordnungen nicht maßstäblich, sondern übertrieben verzerrt abgebildet sind, damit die Unterschiede mit bloßem Auge wahrnehmbar sind. Der Fachmann auf dem Gebiet der integrierten Optik wird in Kenntnis der Erfindung die Dimensionierungen und Lagezuordnungen ohne weiteres in die Praxis umsetzen können. Aus den vorstehenden Gründen können auch die Strahlenverläufe und die Beugungsgitter nicht optisch korrekt, sondern nur symbolisch dargestellt werden.

Es zeigt:

Figur 1     eine Meßeinrichtung mit integriertem Halbleiterlaser-Baustein,

Figur 2     eine Meßeinrichtung mit integriertem Halbleiterlaser-Baustein und planarer Mikrolinse,

Figur 3     eine Meßeinrichtung mit integriertem Halbleiterlaser-Baustein und Wellenleiterlinse,

Figur 4     eine Meßeinrichtung mit integriertem Halbleiterlaser-Baustein und kollimierendem Auskoppelgitter.

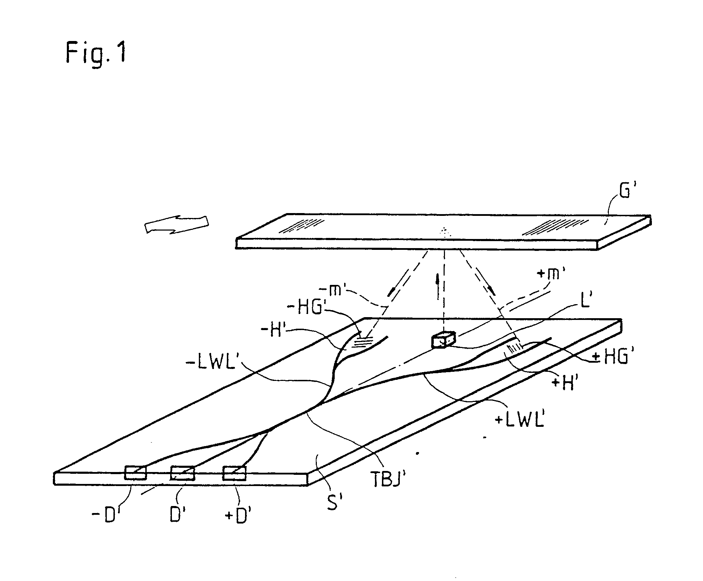

Bei einer in der Figur 1 dargestellten Positionsmeßeinrichtung ist ein Beugungsgitter G' vorgesehen, dessen Position relativ zum Substrat S' gemessen werden soll.

Die Strahlung eines Halbleiterlasers L' wird am Beugungsgitter G' gebeugt und es entstehen Teilstrahlenbündel +m' und -m' von gleicher Ordnung, aber entgegengesetztem Vorzeichen. Der Halbleiterlaser L' ist erfindungsgemäß Bestandteil einer integrierten optischen Schaltung und somit auf dem Substrat S' angeordnet.

Die Teilstrahlenbündel +m' und -m' fallen auf das Substrat S'. Auf dem Substrat S' befinden sich zwei Einkoppelelemente +H' und -H', zwei Lichtwellenleiter +LWL' und -LWL', ein Koppler TBJ' sowie drei Detektoren +D', D', -D'. Im vorliegenden Ausführungsbeispiel sind diese Elemente in Form einer integrierten optischen Schaltung auf dem Substrat S' zusammengefaßt, die auch den Halbleiterlaser L' und eine nicht darstellbare Auswerteelektronik nebst Anzeige umfaßt.

Die Einkoppelelemente +H' und -H' sind in Form von sogenannten adiabatischen Hörnern aufgebaut. Die Einkoppelelemente +H' und -H' sind quer zur Bewegungsrichtung des Beugungsgitters G' orientiert. Die Einkoppelelemente +H' und -H' weisen Einkoppelgitter +HG' und -H' auf. Die Gitterkonstanten der Einkoppelgitter +HG' und -HG' und ihre Orientierung richten sich nach den Einkoppelbedingungen der gebeugten Teilstrahlenbündel +m' und -m'.

Der Koppler TBJ' kann so ausgelegt werden, daß an seinen drei Ausgängen zueinander phasenverschobene Signale anstehen. Die Signale können zueinander jeweils um 120° phasenverschoben sein, es können aber auch an zwei Ausgängen Signale anstehen, die eine Sinus- bzw. Cosinus-Funktion repräsentieren, wobei am dritten Ausgang ein Referenzsignal ansteht. Die Signale an den Ausgängen werden wiederum mittels Lichtwellenleitern zu Detektoren +D', D', -D' geleitet, von denen sie in elektrische Signale umgewandelt und einer elektronischen Auswerteschaltung zugeführt werden, die Bestandteil der integrierten optischen Schaltung ist, aber nicht dargestellt werden kann.

Der Strahlungsquelle L' kann eine planare Linse GL' zugeordnet sein. Unter planaren Linsen sind planare Gradientenindex Linsen (siehe Applied Optics, Vol. 25, No. 19, Oktober 86, Seiten 3388 - 3396 und Naumann, Helmut: Bauelemente der Optik: Taschenbuch für Konstrukteure/H. Naumann; G. Schröder - 4. überarb. u. erw. Ausg., München; Wien: Hanser, 1983, Seiten 545 - 548) oder planare Fresnellinsen oder Zonenlinsen zu verstehen.

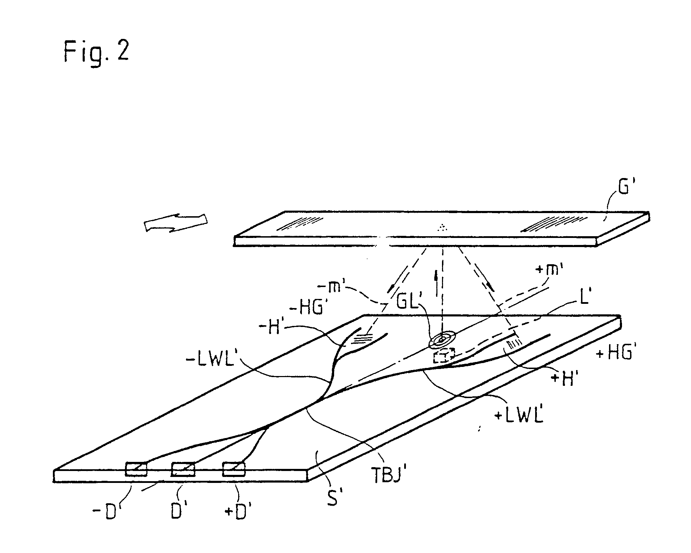

Eine derartige Variante ist in Figur 2 dargestellt. Um nicht unnötig zu verwirren, werden für gleiche Bauelemente in den verschiedenen Figuren die gleichen Bezugszeichen verwendet. Nur für die jeweils abweichenden Bauteile sind neue Bezugszeichen eingeführt.

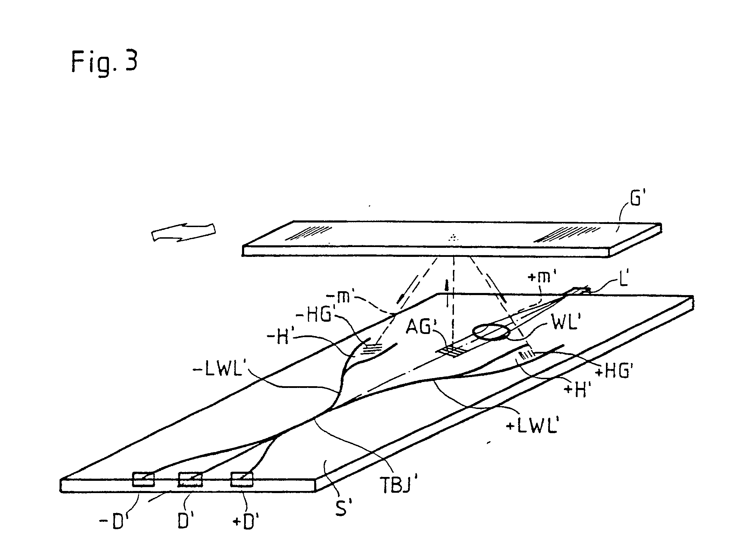

In Figur 3 ist der Halbleiterlaser L' auf dem Substrat S' integriert, dessen Strahlung mittels einer Wellenleiterlinse WL' und einem Auskoppelgitter AG' auf das Beugungsgitter G' gelenkt wird. Eine solche Wellenleiterlinse ist beispielsweise in der Druckschrift "Laser und Optoelektronik" Nr. 4/1986, Seite 331, beschrieben.

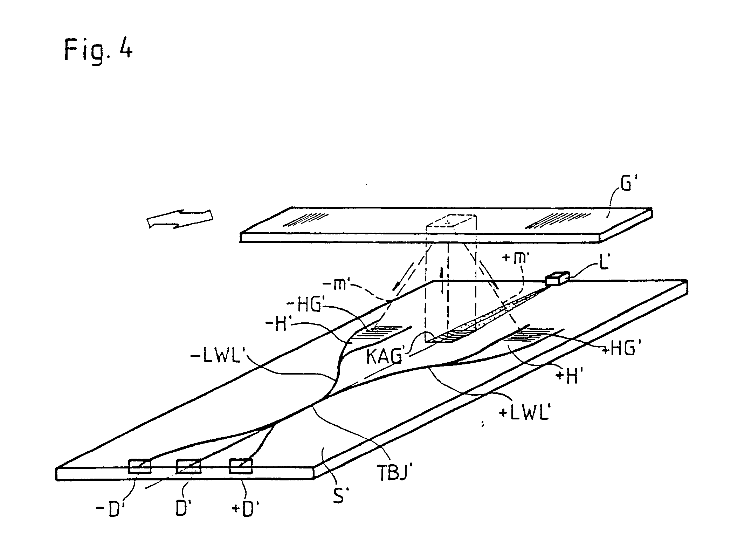

Schließlich ist in Figur 4 ein integrierter Laser L' gezeigt, dessen Strahlung mit Hilfe eines kolli-

mierenden Auskoppelgitters KAG′ auf das Beugungsgitter G′ gerichtet wird.

Kollimierende Auskoppelgitter sind in integrierten optischen Schaltungen beispielsweise aus der Technik der interferometrischen Längenmessung bekannt (siehe Veröffentlichung "INTEGRATED-OPTIC SENSORS USING GRATING COMPONENTS", Seite 174, von S. URA, T. SUHARA und H. NISHIHARA auf der 4th INTERNATIONAL CONFERENCE ON OPTICAL FIBER SENSORS; in Tokyo, Japan, Oktober 1986).

Die Verschiebebewegungen des Beugungsgitters G′ werden so zu im allgemeinen digital angezeigten Positions- oder Geschwindigkeitsmeßwerten für die zu messende Maschinenbewegung umgeformt. Falls keine Bewegungsrichtung erkannt werden muß - wie beispielsweise bei Geschwindigkeitsmessungen - kann die Erzeugung von phasenverschobenen Signalen entfallen.

## Patentansprüche

1. Lichtelektrische Meßeinrichtung zur Messung der Position eines Beugungsgitters relativ zu einem Substrat mit einer Beleuchtungseinrichtung und wenigstens einem quer zur Strahlrichtung der vorgenannten Beleuchtungseinrichtung verschiebbaren Beugungsgitter zum Erzeugen von mindestens zwei gebeugten Teilstrahlenbündeln, die mittels zwei Einkoppelelementen in zwei Lichtwellenleiter eingekoppelt, zwei Eingängen eines Kopplers zugeführt, im Koppler zur Interferenz gebracht und von wenigstens einem Detektor in wenigstens ein elektrisches Signal umgewandelt werden, bei der die Einkoppelelemente, die Lichtwellenleiter, der Koppler und der wenigstens eine Detektor in Form einer integrierten optischen Schaltung auf einem Substrat zusammengefaßt sind, und bei der die integrierte optische Schaltung auch die Beleuchtungseinrichtung (L′) beinhaltet.

2. Lichtelektrische Meßeinrichtung nach Anspruch 1, dadurch gekennzeichnet, daß die Beleuchtungseinrichtung ein Halbleiterlaser (L′) ist.

3. Lichtelektrische Meßeinrichtung nach Anspruch 1, dadurch gekennzeichnet, daß die Beleuchtungseinrichtung eine planare Linse (GL′) aufweist, die ebenfalls als Baustein der integrierten optischen Schaltung auf dem Substrat (S′) angeordnet ist.

4. Lichtelektrische Meßeinrichtung nach Anspruch 1, dadurch gekennzeichnet, daß die Beleuchtungseinrichtung eine Wellenleiterlinse (WL′) und ein Auskoppelgitter (AG′) aufweist, die als

Bausteine der integrierten optischen Schaltung auf dem Substrat (S′) angeordnet sind.

5. Lichtelektrische Meßeinrichtung nach Anspruch 1, dadurch gekennzeichnet, daß die Beleuchtungseinrichtung ein kollimierendes Auskoppelgitter (KAG′) aufweist, das als Baustein der integrierten optischen Schaltung auf dem Substrat (S′) angeordnet ist.

## Claims

1. A photoelectric measuring apparatus for measuring the position of a diffraction grid relative to a substrate, with an illuminating device and at least one diffraction grid displaceable transversely to the abovenamed illuminating device, said diffraction grid generating at least two diffracted part light beams which are input by two input elements into two light waveguides, passed to two inputs of a coupler, caused to interfere in the coupler and converted by at least one detector into at least one electrical signal, in which the input elements, the light waveguide, the coupler and the minimum of one detector, are combined on a substrate into the form of an integrated optical circuit, and in which the integrated optical circuit also contains the illuminating device (L').

2. A photoelectric measuring apparatus according to Claim 1, characterised in that the illuminating device is a semiconductor laser (L').

3. A photoelectric measuring apparatus according to Claim 1, characterised in that the illuminating device has a planar lens (GL'), which is also disposed on the substrate (S') as a module of the integrated optical circuit.

4. A photoelectric measuring apparatus according to Claim 1, characterised in that the illuminating device has a waveguide lens (WL') and a decoupling grid (AG'), which are disposed on the substrate (S') as modules of the integrated optical circuit.

5. A photoelectric measuring apparatus according to Claim 1, characterised in that the illuminating device has a collimating decoupling grid (KAG'), which is disposed on the substrate (S') as a module of the integrated optical circuit.

## Revendications

1. Dispositif de mesure photo-électrique pour la mesure de la position d'un réseau de diffraction par rapport à un substrat, comportant un dispositif d'éclairage et au moins un réseau de phase pouvant se déplacer perpendiculairement à la direction du faisceau dudit dispositif d'éclairage pour produire au moins deux faisceaux partiels de rayons diffractés, qui sont envoyés dans deux guides d'ondes lumineuses au moyen de deux éléments de couplage, sont amenés à deux entrées d'un coupleur, sont amenés en interférence à l'intérieur du coupleur et sont transformés en au moins un signal électrique par au moins un détecteur, dans lequel les éléments de couplage, les guides d'ondes lumineuses, le coupleur et le détecteur, au nombre d'au moins un, sont regroupés sur un substrat sous la forme d'un circuit optique intégré, et dans lequel le circuit optique intégré contient également le dispositif d'éclairage (L').

2. Dispositif de mesure photo-électrique selon la revendication 1, **caractérisé** en ce que le dispositif d'éclairage est un laser à semi-conducteur (L').

3. Dispositif de mesure photo-électrique selon la revendication 1, **caractérisé** en ce que le dispositif d'éclairage comporte une lentille planaire (GL'), qui, en tant qu'élément du circuit optique intégré, est également montée sur le substrat (S').

4. Dispositif de mesure photo-électrique selon la revendication 1, **caractérisé** en ce que le dispositif d'éclairage comporte une lentille de guide d'ondes (WL') et un réseau de découplage (AG'), qui, en tant qu'éléments du circuit optique intégré, sont montés sur le substrat (S').

5. Dispositif de mesure photo-électrique selon la revendication 1, **caractérisé** en ce que le dispositif d'éclairage comporte un réseau de découplage (KAG') effectuant une collimation, qui, en tant qu'élément du circuit optique intégré, est monté sur le substrat (S').

Fig.1

## Fig. 2

Fig. 3

Fig. 4